# EUROPÄISCHE PATENTANMELDUNG

(11) **EP 2 124 198 A1**
(43) Veröffentlichungstag der Anmeldung: **25.11.2009**
(21) Anmeldenummer: 08405142.4
(22) Anmeldetag: 22.05.2008
(51) Int. Cl.: G07B 17/00, G06Q 10/00

(54) **Einrichtung zur Annahme von zum Versand vorbereiteten Gegenständen und/oder Gütern und zur Aufbereitung der Durchführung des Versandes der Gegenstände und/oder Güter**

(71) Anmelder: FRAMA AG, 3438 Lauperswil (CH)
(72) Erfinder: Haug, Thomas Peter, 3550 Langnau i. E. (CH)
(74) Vertreter: Fenner, Werner

(57) **Zusammenfassung**

Eine Einrichtung (1) zur Annahme und Abwicklung von zum Versand vorbereiteten Gegenständen (11) und/oder Gütern, die von einer mit einem Verarbeitungssystem (3) für ein Aufbereiten eines Versandauftrages und Anbringen einer wenigstens teilweise codierten Kennung ausgebildeten Aufgabestelle (2) einem Zustelldienst (6 bis 9) zum Transport an einen entfernten Bestimmungsort aufgegeben werden, werden durch ein Frankiersystem mit einer Kennung versehen, die mit einem durch aufbereitete Daten die Leitfunktionen unterstützenden Informationssystem (5) verbunden ist, und mit dem ein Versandauftrag zur Ausführung ausgelöst wird, wobei das Verarbeitungssystem (3) öffentlich zugänglich angeordnet und von einer zur Ausführung eines Versandauftrages bestimmten, zulassungsberechtigten Person selbstbedienbar gesteuert ausgebildet ist.

## Beschreibung

Die Erfindung betrifft eine Einrichtung zur Annahme von zum Versand vorbereiteten Gegenständen und/oder Gütern und zur Aufbereitung der Durchführung des Versandes der Gegenstände und/oder Güter, die von einer mit einem Verarbeitungssystem für ein Aufbereiten eines Versandauftrages und Anbringen einer wenigstens teilweise codierten Kennung ausgebildeten Aufgabestelle, einem Zustelldienst zum Transport an einen entfernten Bestimmungsort aufgegeben werden, mit einem für die Versandinformationen enthaltende Kennung ausgebildeten Frankiersystem, das mit einem durch aufbereitete Daten die Leitfunktionen unterstützenden Informationssystem ausgestattet ist, und mit dem ein Versandauftrag zur Ausführung ausgelöst wird.

Reorganisierende Postversandunternehmen bemühen sich vermehrt um einen modernen und effizienten Zugang im nationalen und internationalen Geschäft der Anbieter von Brief und Paketpostversand.

Eine Kennung kann auch als gedruckte Versandquittung, Versandbeleg oder postalischer Verrechnungbeieg bezeichnet werden. Die zum Versand vorbereiteten Gegenstände und/oder Güter können Pakete aller Art, Briefe, Mustersendungen, Zeitschriften, Karten und dgl. sein.

Zum Verarbeitungssystem gehören beispielsweise eine als Hohlraum ausgebildete Vorrichtung mit einer Waage zur Gewichtsmessung und/oder Einrichtungen zur Volumenmessung. Als Benutzerführung steht beispielsweise eine Tastatur und ein Bildschirm oder ein Touch Screen zur Verfügung, mit denen das Versandziel und die Versandart sowie weitere Versanddaten bestimmt resp. eingegeben werden können. Selbstverständlich steht hinter der Eingabevorrichtung des Verarbeitungssystems ein Rechner zur Verfügung, der die Daten auf den Bildschirm bringt und einen Versandauftrag mit den notwendigen Dokumenten aufbereitet und zur Ausführung auslöst. Ein mit dem Rechner verbundener Drucker dient der Ausgabe eines aufklebbaren resp. anbringbaren Beleges, Dokumentes oder Leitzettels, der das Versandobjekt begleitet und auch zur Verfolgung letzterens benutzt werden kann. Der Rechner kann die Auftragsdurchführung steuern und wird zur Verrechnung der Versandkosten benutzt.

Einige Anbieter Versandaufträgen treffen nicht die Erwartungen oder Bedürfnisse und lassen den breiten Bereich von Komfort, Zweckmässigkeit und Verantwortung gegenüber Benutzern vermissen. Daraus erwachsen neue Möglichkeiten und Gelegenheiten für voraus denkende Unternehmen.

Auf den verschiedenen internationalen Märkten ist es bekannt, dass Versandanbieter nach flexibleren und effizienteren Versandmöglichkeiten und einfachen Zahlungsmethoden, sprich neuen Wegen im internationalen Warenverkehr suchen. Der liberalisierte Markt wird deshalb die Zugangsform der Post- und Versandsysteme ändern, die vorhandene Technik besser nutzen und wird dadurch die potenten Benutzer durch eine Annäherung an die Systeme und von einer höhere Effizienz begeistern.

Bekannte Servicefirmen arbeiten oft träge und sind auf fremde Unterstützung angewiesen; ihre Zahlungsabläufe sind umständlich aufgrund der erforderlichen Sicherheit im Verkehr mit Devisen.

Es stellt sich daher an die Erfindung die Aufgabe, die Dienstleistung auf dem Gebiet des Postversandes wenigstens aufrecht zu erhalten und zu garantieren, die Effizienz der Logistik mit Uebersichtlichkeit zu steigern.

Erfindungsgemäss wird diese Aufgabe dadurch gelöst, dass das Verarbeitungssystem öffentlich zugänglich angeordnet resp. aufgestellt und von einer zur Aufbereitung eines zur Durchführung eines Versandauftrages bestimmten, zulassungsberechtigten Person selbstbedienbar gesteuert ausgebildet ist.

Damit sind die oben erwähnten Umstände für den Postverkehr weitgehend behoben und ein rationellerer Aufgabevorgang wird verfügbar. Es kann eine vierundzwanzig stündige personenfreie Bereitschaft und mit hoher Zuverlässigkeit und Sicherheit gewährleistet werden. Eine Zugangs- und Bedienungsberechtigung kann beispielsweise durch eine erworbene, als elektronischer Schlüssel bestimmte Kreditkarte (VISA, Master etc.) vorgesehen sein, aufgrund der der Zugang ermöglicht, die Bedienung und die Verrechnung eines Auftrages auf einfache Art abgewickelt werden kann. Bei den Auftragskosten kann ein Vorauszahlungs-, Abbuchungs- oder ein nach Ausführung eines Auftrages anwendbarer Zahlungsmodus gewählt oder festgelegt werden.

Eine die Vorgehensweise beschreibende Benutzerführung ist im Verarbeitungssystem installiert und über den Touch Screen, die Maus oder Tastatur bedienbar.

Eine Ueberwachung der Einrichtung von aussen ist überflüssig, zumal die zur Sicherheit erforderlichen Vorkehrungen über innere Organe gewährleistet sind.

Vorteilhaft ist die Aufgabestelle als Zustelldienst ausgebildet oder der Zustelldienst weist eine Aufgabestelle auf. Eine derartige Vereinigung begünstigt die Vereinfachung der vorgeschlagenen Einrichtung und den Aufwand der Umtriebe, indem einem Versandauftrag eine mit dem Zustelldienst vereinbarte Trakingnummer zugeordnet werden kann.

Dies ist auch der Fall, wenn Aufgabestelle und Zustelldienst nicht vereint sind.

Bevorzugte Standorte der vorgeschlagenen Einrichtung sind wichtige Plätze einer Stadt und/oder stark frequentierte Orte.

Die Bedienung des Verarbeitungssystems erfolgt vorzugsweise mittels Touch Screen und zum Druck einer Kennung steht ein mit dem Verarbeitungssystem verbundener Drucker zur Verfügung. Das Frankiersystem besteht aus einem Rechner mit Datenspeicher für die Tarifberechnungen und Sicherheit des Systems, einem Zahlungsterminal für Kredit- oder Debitkarten etc., einer Dateneingabestelle, einem Verrechnungsmanagement- und Informationssystem.

Damit wird der Versand kunden- resp. anwenderfreundlicher als zuvor und auch umfassender und kann durch eine mittels elektronischer und/oder visueller Bedienungsanleitung geführten Person von einer zentralen Stelle resp. von der Aufgabestelle aus bis zum Ziel durch sog. Track- and Trace-Informationen gesteuert, begleitet und kontrolliert werden.

Die Aufgabestelle ist gleichzeitig sinngemäss für eine Zeit-, Tarifvergleichs- und Kostenoptimierung im Versand von Gütern aller Art besorgt.

Es lassen sich dadurch von einer Aufgabestelle resp. Von einer Stelle auf dem Versandweg aus, die nicht zwingend der Standort des Verarbeitungssystems sein muss, der momentane Standort eines Versandgegenstandes feststellen und verfolgen.

Damit kann der Nutzen des Verarbeitungssystems erheblich erweitert, ein grösseres Kommuikationsgebiet geschaffen und intensiviert bearbeitet werden; es können die Verbindungen und der Verkehr verbessert und die Kosten unmittelbar erfasst und für das Budgetieren berechnet werden. Letztlich wird über dieses System resp. das benutzte Verarbeitungssystem eine höhere Zuverlässigkeit und Vereinfachung des Versands von Gegenständen erreicht.

Für eine wenigstens teilweise codierte Kennung von zum Versand bestimmten Gegenständen und/oder Gütern können Barcode, programmierbare Chips, beispielsweise speicherfähige RFID (radio frequency ID) Chips verwendet werden. Chips können auch aufgeklebt oder anderswie befestigt werden.

Mit der Anbringung einer Kennung wird die Aufgabestelle der Gegenstände automatisch identifiziert, wodurch eine weltumspannte Ueberwachung eines Auftrages möglich wird.

Die Aufgabestelle zeichnet sich u.a. dadurch aus, dass sie über ein Frankiersystem verfügt, das mit dem Internet oder einer anderen Kommunikationsschnittstelle verbindbar ist.

Zwischen Aufgabestelle und Zustelldienst könnte ein Abholdienst oder Zubringdienst , beispielsweise ein Kurierdienst, für die zum Versand bereitstehenden Gegenstände und/oder Güter eingerichtet werden, der die Zustelldienste bedient.

Die Aufgabestelle resp. die Einrichtung kann zweckmässig mit einem Warteraum resp. Abholraum für die verarbeiteten Gegenstände und/oder Güter ausgebildet sein, um vor Diebstahl gesichert zu sein, bevor sie von einem Zustelldienst abgeholt werden.

Das System gestattet auch Zusammenschlüsse durch Verbindungen mehrerer Unternehmen zu einer gemeinsamen Einrichtung.

Hierzu trägt ein dem Verarbeitungssystem der zum Versand bereiten Güter zuschaltbares resp. ein mit diesem verbundenes, wenigstens Informationen aus Daten eines Zustelldienstes generierendes und an das Verarbeitungssystem Daten übertragendes und/oder aufbereitendes Informationssystem entscheidend bei. Die Verbindung zwischen Verarbeitungssystem und Informationssystem kann beispielsweise durch eine für das Frankieren erteilte Identifikationsnummer oder Lizenznummer entstehen, die vom Informationssystem vergeben wird.

Der Austausch von Daten und/oder Informationen zwischen Informationssystem, Verarbeitungssystem und Zustelldiensten kann aus Sicherheitsgründen vorteilhaft verschlüsselt erfolgen.

Nach durchgeführter Bearbeitung eines Versandauftrages mit dem Verarbeitungssystem wird der Auftrag einem oder mehreren der gewählten Zustelldienste erteilt; dies kann direkt von dem Verarbeitungssystem an die Zustelldienste oder direkt über das Informationssystem erfolgen. Die Auslösung oder die Ingangsetzung eines Versandauftrages geschieht durch das Verarbeitungssystem automatisch oder bedarfsfalls manuell mittels einer Funktionstaste.

Durch die elektronische Datenübertragung wird eine eindeutige Anweisung zur Auftragsdurchführung erreicht.

Das Informationssystem, als Datenverarbeitungs- und Leitzentrum ausgebildet, stellt den Zustelldiensten vorzugsweise optimierte Daten oder Grundlagen zur Datenerfassung zur Verfügung, die über das Verarbeitungssystem abfragbar und/oder verfügbar und zur Steuerung des Versandverfahrens benutzbar sind. Deshalb ist das Informationssystem mit einem rechenfähigen Steuerungs- und Abfrageprogramm ausgestattet und mit dem Verarbeitungssystem sowie den am Versand von Gegenständen und/oder Gütern beteiligten Zustell- resp. Dienstleistungsbetrieben zum Datenübertragung verbunden.

Zweckmässig sind an das Informationssystem über Datenverbindungsleitungen, auch wireless, von dem Verarbeitungssystem resp. von der Aufgabestelle aus, für den Versand von Gegenständen und/oder Gütern abrufbare Daten eines Zustelldienstes übertragbar, die es erlauben, den Verlauf resp. die Abwicklung des Versandes eines Gegenstandes von einer Stelle aus, beispielsweise der Aufgabestelle vorzubereiten, zu bestimmen resp. zu initiieren und abzuwickeln.

Das Informationssystem ist zweckmässig mit einem rechenfähigen elektronischen Steuerprogramm ausgestattet, von dem Daten verarbeitbar, abrufbar, generierbar und auf das Verarbeitungssystem und/oder ein Rechensystem eines resp. der Zustelldienste übertragbar sind.

Zur Bildung eines einen Versandgegenstand begleitenden Labels oder einer Etikette können in dem Informationssystem verfügbare oder von diesem generierte resp. für den Versand zur Verfügung gestellte Daten von dem Verarbeitungssystem aufgrund eines Versandauftrages angefordert, empfangen und verarbeitet werden, sowohl für den Brief- wie auch den Paket- und Güterversand.

Im Sinne einer verbreiteten und wirtschaftlichen Nutzung sind mehrere Verarbeitungssysteme an ein Informationssystem anschliessbar.

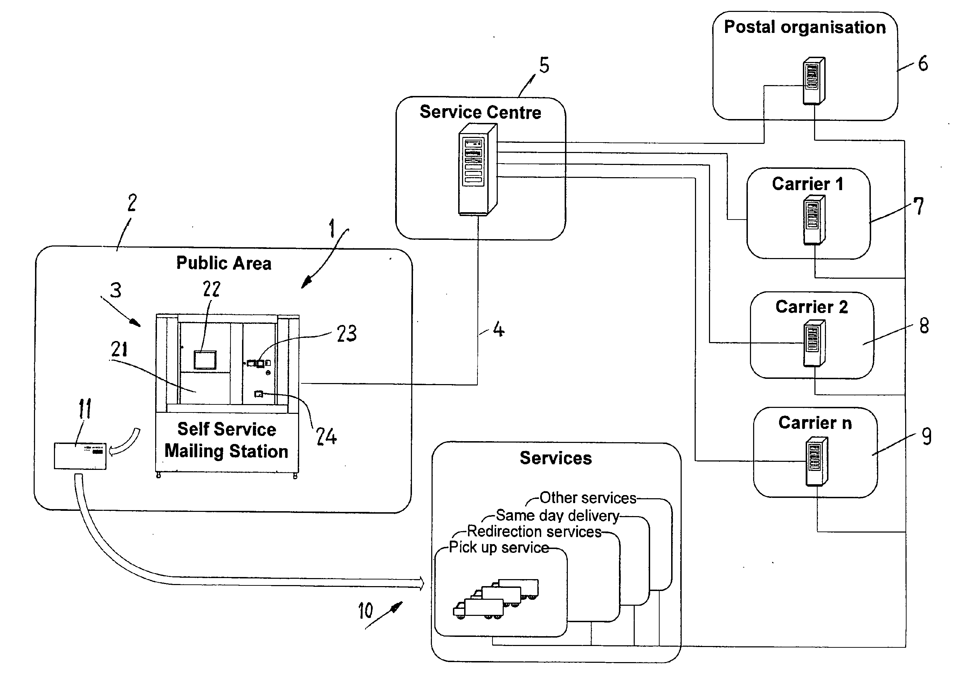

Anschliessend wird die Erfindung unter Bezugnahme auf eine Zeichnung, auf die bezüglich aller in der Beschreibung nicht näher erwähnten Einzelheiten verwiesen wird, anhand eines Ausführungsbeispiels erläutert. Die
- einzige Figur: zeigt schematisch eine erfindungsgemässe Ein- richtung zur Annahme von zum Versand vor- bereiteten Gegenständen und/oder Gütern und zur Aufbereitung der Durchführung des Versan- des der Gegenstände und/oder Güter.

In der einzigen Figur ist ein Verbundnetz zum Versand von Gegenständen, wie beispielsweise Briefe, Dokumente oder dgl. und/oder Pakete, zur Kommunikation und für einen weltweiten Verkehr mit Gütern aller Art dargestellt. Sie zeigt eine erfindungsgemässe Einrichtung 1 zum Versand von Gegenständen und/oder Gütern 11 im Zusammenhang mit der Aufgabe und Abwicklung von Versandaufträgen und die dafür erforderlichen weiteren Mittel. Aufgestellt ist die Einrichtung 1 vorteilhaft in einem geschützten Raum 2, der zum Zweck einer Selbstbedienung des Verarbeitungssystems vorzugsweise ausschliesslich für zugangsberechtigte Personen benutzbar ist und die zur Bedienung der Einrichtung 1 auch berechtigt sind. Die zur Frankierung oder Freistempelung benutzte Frankiermaschine oder ein Frankiersystem 3, das Bestandteil der Einrichtung 1 ist, kann mit modernen Vorrichtungen, wie Tastatur, Maus oder Touchsreen bedient werden. Das Anbringen einer codierten Kennung kann automatisch oder teilwise manuell erfolgen, so dass die Versandgüter versandfertig einem Zustelldienst übergegeben werden können.

Idealerweise ist die Aufgabestelle und ein Zustelldienst 6 bis 9 vereint an einem Standort aufgestellt oder es sind mehrere verteilte Aufgabestellen 2 einem oder mehreren Zustelldiensten 6 bis 9 zugeordnet, die den Transport der Güter 11 an ein bestimmtes Ziel übernehmen.

Ausgangspunkt ist ein in einem öffentlich zugänglichen Raum 2 resp. An einem Ort als Einrichtung 1 resp. Einheit installiertes, von einer Person manuell bedienbares Verarbeitungssystem 3 mit den zum Teil schon erwähnten Verarbeitungskomponenten ohne eine angestellte Bedienungsperson und bildet eine Aufgabestelle für Briefe, Pakete oder dgl. Versandgut. Jedem Verarbeitungssystem 3 steht eine eigene Kommunikations-Schnitistelle resp. eine Teiefon- bzw. Kommunikationsverbindung zur Verfügung, mit der das Verarbeitungssystem 3 über eine Leitung 4 mit einem als Verarbeitungs- und Leitsystem ausgebildeten Informationssystem 5 verbunden resp. online verbunden ist. Das Informationssystem 5 steht mit mehreren teilweise bezeichneten Zustelldiensten 6 bis 9 in Verbindung, welche Dienstleistungen zum Versand von Gütern sowie eine Auswahl Transportmöglichkeiten,Tarife zur Kalkulation und zum Vergleich sowie zur Auswahl, mit verschiedenen Verrechnungsmodi der Dienstleistungen anbieten und vorzugsweise über einen Abholdienst 10 zur Entgegennahme der Gegenstände 11 an der Aufgabestelle 4 verfügen. Ueber die Verbindung mit dem Informationssystem 5 können durch dieses Versand und/oder Frachtkosten aus Daten und Informationen eines oder mehrerer Zustelldienste generiert und auf das Verarbeitungssystem 3 übertragen und dort verarbeitet, verglichen und benutzt werden, sodass die gesamten Versand- resp. Auftragskosten kalkulierbar und für einen abzuwickelden Versandauftrag bestimmund verrechenbar sind.

Hierzu steht zwischen Verarbeitungssystem 3, Informationssystem 5 und Zustelldiensten 6 bis 9 eine aufgebaute Verbindungsleitung. Selbstverständlich sind in den betroffenen Stationen untereinander vernetzte Rechner installiert, von denen kalkulierte Versand- oder Transport- resp. Kosten- und Verrechnungsdaten abrufbar sind.

Dadurch ist es möglich, an der Aufgabestelle 2 resp. durch das Verarbeitungssystem 3 die Art des Versandes, die Durchführung sowie diejenigen Kosten zu berechnen, zu vergleichen und anschliessend zu verrechnen, die durch den Transport von der Aufgabestelle 2 über die Zustelldienste bis zum bestimmten Ziel entstehen bzw. verursacht werden bzw. worden sind.

D.h., die Auftragsbearbeitung und Auslösung des Versands bestimmter Güter an der Einrichtung 1 kann durch eine dafür beauftragte Person des Auftraggebers oder Lieferanten ohne zusätzliche Hilfe erfolgen, wozu bisher mehrere Personen beteiligt waren.

Das Verarbeitungssystem 3 verfügt beispielsweise über einen mit dem Informationssystem verbundenen Rechner, sodass es möglich ist, Informationen oder Daten des Informationssystems 5 auch über ein Kommunikationsnetz zu beziehen.

Einem an der Aufgabestelle 2 eintreffenden Versandauftrag werden durch das Verarbeitungssystem 3 den zum Versand bestimmten Gütern Identifikations- und Destinationsdaten resp. von dem Informationssystem 5 resp. der Informationseinrichtung entgegengenommene Auftrags- resp. Trackingnummern zugeteilt, durch die ein ausgelöster Auftrag auf dem Versandweg verfolgt werden kann.

Da von der Aufgabestelle 2 entfernte Zustelldienste 6 bis 9 nur periodisch die aufgegebenen bzw. verarbeiteten Gegenstände und/oder Güter abholen werden, ist es notwendig, dass die Aufgabestelle 2 einen Aufbewahrungs- resp. Warteraum oder dgl. für die verarbeiteten Güter aufweist, in dem letztere gegen Diebstahl gesichert bis zum Abholen aufbewahrt werden.

Selbstverständlich lassen sich durch das Verarbeitungssystem 3 einen Versandauftrag bei der Durchführung begleitende Versanddokumente erstellen, mit den notwendigen Angaben, über die die Bedienungsperson teilweise verfügt und solche, die von dem Verarbeitungssystem 3 ergänzend zugeführt werden.

Ein Display resp. ein Bildschirm 14 des Frankiersystems 3 dient einer graphischen Benutzerführung, beispielsweise eine Tastatur, eine Maus und/oder ein Touch Sreen und gestattet eine organisierte physische Auftragsabwicklung eines Versandauftrages an der Aufgabestelle 2 aus.

Diese Mittel gestatten eine kontrollierte Versandaufgabe an einem Gerät, das eine räumliche Umgebung 21 zur Annahme eines Versandobjektes 11 aufweist, in dem das Gewicht und/oder das Volumen gemessen werden kann. Mittels Touch Screen 22 werden die vorhandenen Daten verarbeitet und ergänzende, vom Informationssystem 5 verfügbare Daten übernommen. Der Zugang zur Einrichtung 1 erfolgt über eine kreditkartenaugliche Anmeldevorrichtung 23, die auch ausserhalb des Gerätes angeordnet sein kann. Die Versanddokumente, beispielsweise in Form einer auf die Versandobjekte aufklebbaren Etikette, werden vom Verarbeitungssystem 3 an einer Ausgabestelle 24 entnommen. Hierzu weist das Verarbeitungssystem 3 einen Drucker auf, der beispielsweise mit einem Frankiersystem verbunden ist. Eine zumindest ähnliche Verarbeitung ist bei Bankomaten bekannt und muss hier nicht detailliert beschrieben werden.

Der Bildschirm des Verarbeitungssystems 3 kann zu diesem Zweck ein Bedienermenü anzeigen, über welches vom Informationssystem generierte und dort gespeicherte Track- & Trace-Informationen, Versandberichte, Auftragsbestätigungen, Infos der Zustelldienste, Abrechnungsprotokolle etc. abrufbar oder übermittelbar, beispielsweise an den Auftraggeber, sind und von der Bedienungsperson Daten eingegeben werden.

Der Verlauf eines Versandauftrages bleibt durch eine mögliche Verfolgung bis zum Bestimmungsort überwacht und durch Rückmeldungen über das Informationssystem kann ein momentaner Standort eines Versandstücks mittels Verarbeitungssystem 3 kontrolliert werden. Die Ueberprüfung des Standortes braucht nicht zwingend an der Aufgabestelle eines betroffenen Versandgegenstandes durchgeführt zu werden, denn letzterer kann durch das Informatinssystem 5 aufgrund der zugeordneten Trackingnummer über alle Stationen des Versandweges kontrolliert werden. Ein Brief von einer schweizerischen Aufgabestelle nach einem Zielort in Japan kann durch das vorgeschlagene Versandsystem an einer dafür eingerichteten Zollabfertigungsstelle, am Flughafen Zürich, auf dem Flug, an dem bestimmten Flughafen in Japan, auf dem Schienenverkehrsweg, an dem Hauptverteil- oder einem Verteilzentrum bis zum Empfänger in Japan verfolgt und durch Rückmeldungen bestätigt werden.

## Patentansprüche

1. Einrichtung (1) zur Annahme von zum Versand vorbereiteten Gegenständen und/oder Gütern (11) und zur Aufbereitung der Durchführung des Versandes der Gegenstände und/oder Güter (11), die von einer mit einem Verarbeitungssystem (3) für ein Aufbereiten eines Versandauftrages und Anbringen einer wenigstens teilweise codierten Kennung ausgebildeten Aufgabestelle (2) einem Zustelldienst (6 bis 9) zum Transport an einen entfernten Bestimmungsort aufgegeben werden, mit einem für die Versandinformationen enthaltende Kennung ausgebildeten Frankiersystem, das mit einem durch aufbereitete Daten die Leitfunktionen unterstützenden Informationssystem (5) ausgestattet ist, und mit dem ein Versandauftrag zur Ausführung ausgelöst wird, **dadurch gekennzeichnet, dass** das Verarbeitungssystem (3) öffentlich zugänglich angeordnet und von einer zur Aufbereitung der Durchführung eines Versandauftrages bestimmten, zulassungsberechtigten Person selbstbedienbar gesteuert ausgebildet ist.

2. Einrichtung nach Anspruch 1, **dadurch gekennzeichnet, dass** die Aufgabestelle (2) als Zustelldienst (6 bis 9) ausgebildet ist resp. der Zustelldienst (6 bis 9) durch eine Aufgabestelle (2) ausgebildet ist.

3. Einrichtung nach Anspruch 1 oder 2, **dadurch gekennzeichnet, dass** diese (1) innerhalb oder ausserhalb eines Gebäudes aufstellbar ausgebildet ist.

4. Einrichtung nach einem der Ansprüche 1 bis 3, **dadurch gekennzeichnet, dass** das Verarbeitungssystem (3) zur Erstellung der einen Versandauftrag begleitenden Dokumente ausgebildet ist.

5. Einrichtung nach Anspruch 4, **dadurch gekennzeichnet, dass** das Verarbeitungssystem (3) als Informationsempfangs- und Verarbeitungsstelle ausgebildet ist.

6. Einrichtung nach einem der Ansprüche 4 oder 5, **dadurch gekennzeichnet, dass** das Verarbeitungssystem (3) jeweils wenigstens eine Kommunikationsschnittstelle zur Informationseinrichtung (5) des Informationssystems und einem Zustelldienst aufweist.

7. Einrichtung nach einem der Ansprüche 4 bis 6, **dadurch gekennzeichnet, dass** das Verarbeitungssystem (3) zur Versandabwicklungs-, Tarifsvergleich und Tarifoptimierung der zu verschickenden Güter ausgebildet ist.

8. Einrichtung nach einem der Ansprüche 1 bis 7, **dadurch gekennzeichnet, dass d**as Verarbeitungssystem (3) mit Leitfunktionen für die Informationseinrichtung (5) und/oder einen Zustelldienst (6 bis 9) ausgebildet ist.

9. Einrichtung nach einem der Ansprüche 1 bis 8, **dadurch gekennzeichnet, dass** die mit dem Verarbeitungssystem (3) ausgestattete Aufgabestelle (2) über die Informationseinrichtung (5) mit einem Abhol- oder Zubringdienst (10) verbunden ist.

10. Einrichtung nach einem der Ansprüche 1 bis 9, **dadurch gekennzeichnet, dass** die Aufgabestelle (2) einen Warteraum zur Aufbewahrung verarbeiteter Gegenstände und/oder Güter aufweist.

11. Einrichtung nach einem der Ansprüche 1 bis 10, **dadurch gekennzeichnet, dass** die Informationseinrichtung (5) dem Verarbeitungsystem (3) und den Zustelldiensten (6 bis 9) systemübergeordnet ist.

12. Einrichtung nach einem der Ansprüche 1 bis 11, **dadurch gekennzeichnet, dass** mehrere Verarbeitungssysteme (3) an eine mit einem Zustelldienst (6 bis 9) verbundene Informationseinrichtung (5) angeschlossen sind.

13. Verfahren zur Annahme von zum Versand vorbereiteten Gegenständen und/oder Gütern und zur Aufbereitung der Durchführung des Versandes der Gegenstände (11) und/oder Güter, die von einer mit einem Verarbeitungssystem (3) für ein Aufbereiten eines Versandauftrages und Anbringen einer wenigstens teilweise codierten Kennung ausgebildeten Aufgabestelle (2) aus wenigstens einem Zustelldienst (6 bis 9) zum Transport an einen entfernten Bestimmungsort übergeben und mit einer Versandinformationen enthaltenden Kennung versehen werden, **dadurch gekennzeichnet, dass** das den Versand zur Ausführung auslösende Verarbeitungssystem (3) öffentlich zugänglich und von einer zur Aufbereitung der Durchführung eines Versandauftrages bestimmten, zulassungsberechtigten Person selbstbedienbar ist.

14. Verfahren nach Anspruch 13, **dadurch gekennzeichnet, dass** eine Trackingnummer durch das Informationssystem bereitgestellt und über das Frankiersystem (6 bis 9) dem Versandauftrag zugeordnet wird.

15. Verfahren nach einem der Ansprüche 13 oder 14, **dadurch gekennzeichnet, dass** zur Auftragsausführung ein durch das Verarbeitungssystem (3) zu bestimmender, vorgeschlagener oder gewählter Zustelldienst (6 bis 9) beauftragt wird.

16. Verfahren nach einem der Ansprüche 13 bis 15, **dadurch gekennzeichnet, dass** dem Verarbeitungssystem (3) ein mit wenigstens einem Zustelldienst (6 bis 9) verbundenes, als Leitsystem ausgebildetes Informationssystem (5) zur Generierung, Speicherung und Uebertragung von zum Versand von Gegenständen (11) und/oder Gütern bestimmten Daten zuschaltbar resp. dass das Verarbeitungssystem (3) mit dem Informationssystem (5) prozessuell verbunden ist.

17. Verfahren nach einem der Ansprüch 13 bis 16, **dadurch gekennzeichnet, dass** die von dem Informationssystem (5) auf das Verarbeitungssystem (3) oder umgekehrt übertragenen resp. austauschbaren Daten durch das Informations- (5) und/oder das Verarbeitungssystem (3) veränderbar sind.

18. Verfahren nach Anspruch 17, **dadurch gekennzeichnet, dass** Daten mehrerer Zustelldienste (6 bis 9) zum Vergleich auf das - Verarbeitungssystem (3) übertragen resp. von letzteren abrufbar sind.

19. Verfahren nach Anspruche 17 oder 18, **dadurch gekennzeichnet, dass** zur Bildung eines aufgrund eines Versandauftrages durch das Verarbeitungssystem (3) ausgefertigten Labels, einer Etikette oder eines anderen Auftragsdokumentes von dem Informationssystem (5) generierte Daten an das Verarbeitungssystem (3) übertragbar sind.
